# EUROPEAN PATENT SPECIFICATION

(11) **EP 1 342 387 B1**
(45) Date of publication and mention of the grant of the patent: **14.11.2007**
(21) Application number: 01271026.5
(22) Date of filing: 11.12.2001
(51) Int. Cl.: H04Q 7/38

(54) **METHOD AND MEANS FOR ESTIMATING AND DISTRIBUTING THE LOAD IN A CELLULAR RADIO COMMUNICATION SYSTEM**
VERFAHREN UND MITTEL ZUR ABSCHÄTZUNG UND VERTEILUNG DER LAST IN EINEM ZELLULAREN FUNKKOMMUNIKATIONSSYSTEM
PROCEDE ET MOYEN D'ESTIMATION ET DE DISTRIBUTION DE LA CHARGE DANS UN SYSTEME DE RADIOCOMMUNICATIONS CELLULAIRES

(30) Priority: 12.12.2000 SE 0004591
(43) Date of publication of application: 10.09.2003
(73) Proprietor: TELEFONAKTIEBOLAGET LM ERICSSON (publ), 164 83 Stockholm (SE)
(72) Inventor: ARVIDSSON, Ake, Olof, S-372 37 Ronneby (SE); NISKA, Hakan, S-589 35 Linköping (SE); TOIVANEN, Kyösti, FIN-02400 Kyrkslätt (FI); WILLGERT, Mikael, S-163 54 Spanga (SE)
(74) Representative: Kribber, Klaus-Dieter
(86) International application number: PCT/SE2001/002752
(87) International publication number: WO 2002/049391

(56) References cited:
- WO-A1-00/24163
- WO-A2-99/46905
- US-A- 5 504 938
- US-A- 5 749 044

## Description

### TECHNICAL FIELD OF THE INVENTION

The present invention relates in general to the field of cellular radio communication and, in particular, to methods and means for estimating and distributing the load in a cellular radio communication system.

### DESCRIPTION OF RELATED ART

A cellular radio communication system is normally divided into an access network and a core network. The access network in GSM includes the Base Transceiver Stations (BTS) and control nodes such as the Base Station Controller (BSC) while the core network includes core network nodes such as the Mobile Switching Centre (MSC), the Visiting Location Register (VLR), the Home Location Register (HLR) and also Serving GPRS Support Nodes (SGSN) if General Packet Radio Service (GPRS) is included in the system.

The next generation cellular radio communication system, i.e. the 3^{rd} generation, is called IMT 2000 by ITU (the International Telecommunication Union) and includes the Universal Mobile Telecommunications System (UMTS). The access network in UMTS includes the base transceiver stations (Node B) and control nodes such as the Radio Network Controller (RNC) while the core network includes the same types of nodes as the GSM system (as described above).

Each control node in the access network (BSC/RNC) is connected to one MSC in known GSM and UMTS systems. This means that each control node always communicates with one dedicated MSC that serves a specific geographical area of the cellular system (i.e. an MSC Service Area). When a mobile station request a service from the cellular system it will be connected to the MSC of the current MSC Service Area by one of the control nodes. It is common to combine each MSC with a VLR into an MSC/VLR, which means that the control node will connect the mobile station to the MSC/VLR of the current MSC Service Area when the mobile station is activated. The mobile station is registered in the VLR part of the MSC/VLR the first time it is connected to that MSC/VLR. Registration means that, e.g., the VLR receives subscriber information etc. from the mobile station, the previous VLR and/or the HLR.

A proposed new type of architecture for a cellular radio communication system is to create a pool of core network nodes, e.g. a pool of MSC's and/or MSC/VLR's, that is connected to one or more access networks, e.g. to control nodes, in the system. This means that each control node can access a number of MSC/VLR's and that a certain MSC/VLR in a pool of MSC/VLR's can serve a mobile station in a larger geographical area than in a "normal" MSC service area, e.g. in a service area that corresponds to a number of MSC service areas. This service area that is supported by all MSC/VLR's in the pool of MSC/VLR's is called MSC-pool service area. This new architecture will reduce inter MSC handovers, reduce inter MSC/VLR location updates and provide for an easy and smooth way to add (to increase capacity) or remove (e.g. for maintenance) MSC's or other core network nodes in the cellular system.

It has been further proposed to use Core Network Node Identifiers (CNNI's) in an addressing function between the access network and the core network so that the control nodes in the access network can find the address to the specific core network node in the pool where a mobile station is registered (i.e. the MSC/VLR in the pool that handles the mobile station). All available CNNI's are allocated to specific core network nodes in the pool. A mobile station will be registered at a core network node and given one of the CNNI's that has been allocated to the core network node in question the first time the mobile station is recognised in the MSC-pool service area. After this, the control nodes use the CNNI's presented by mobile stations to identify the core network node in the pool where a mobile station is registered and to which it should be connected (each CNNI identifies the core network node to which it has been allocated). The CNNI's are used as long as the mobile stations remains in the MSC-pool service area. The actual address to the identified core network node can as an example be found in a table or similar in the control nodes, which includes both CNNI's and core network node addresses.

The control nodes also need to be able to connect a mobile station to one of the MSC/VLR's without the use of a CNNI. This happens, for example, if the mobile station lacks a CNNI (e.g. because it is powered on for the first time), or if the CNNI can not be used by the control node to identify a specific MSC/VLR in the pool. This means that the control node has to select the MSC/VLR in which the mobile station is to be registered. The mobile station will generate a load in the MSC/VLR at which it is registered and to which the control node connects the mobile station, every time it is used. Hence, a control node connected to a pool of MSC/VLR's can provide a load distribution function in the system each time it selects an MSC/VLR in the pool at which a mobile station is to be registered. The mobile station can be registered and connected to any MSC/VLR in the MSC-pool by the control node in normal cases. It is, however, in most situations desirable to distribute the mobile stations within the pool such that all MSC/VLR's in the pool are equally loaded (i.e. such that an even load distribution is obtained).

One way of performing this type of load distribution would be to estimate the load in each MSC/VLR and then connect a mobile station to the least loaded MSC/VLR. Known methods to estimate the load in an MSC/VLR are to measure the processor load, to measure queue lengths in selected buffers or to measure different job response times, whereby the least loaded MSC/VLR would be the one with the lowest processor load, shortest queue length or shortest response time.

These measurements result in an additional burden (i.e. extra load) on the system and reflect the current or previous situation depending on when and how often the measurements are performed. Measurements of these types are usually carried out on a time scale of seconds, which means that they are sensitive to temporary load variations, i.e. short peaks or dips that are insignificant on a longer time scale. Recalling that a mobile station can be registered at one and the same MSC/VLR for hours, days and even weeks, it is clear that the temporary state of a core network node at the time of registration is of minor importance when a mobile station is registered. Instead, a load distribution procedure in a cellular system with a pool of core network nodes should consider future loads in the core network nodes.

Load-sharing based on the loading of a network is mentioned in a technical report drafted by Nortel Networks called "TR 23.913 Turbo-Charger Technical Report version 1.0.0". The report was presented at the 3GPP TSG CN#6 ETSI SMG# Plenary Meeting #6 in Nice, France 13^{th} -15^{th} December 1999. It mentions that random load-sharing, where an MSC/VLR is randomly chosen, and a dynamic load-sharing, which is dependent on the load in the network, can be used by a specific routing function to provide load-sharing among available network resources. The specific routing function takes into account the loading of the network, which is determined by periodically querying network entities to determine their loading or by querying network entities when required. The report does not specify how the loading is to be determined.

By a mobile station is meant all portable equipment intended for radio communication, like mobile stations, transceivers, pagers, electronic notebooks, laptops with integrated radios, communicators, tailored microchips connecting to radios or any other portable electronic equipment using a radio link as a mean of communication.

WO 99/46905 discloses a first processing means collecting information about the load status from a group of second processing means, wherein the first processing means selects one of the second processing means to handle a new mobile station. The load status is determined by the number of data packets that are sent.

WO 00/24163 concerns a method and device for Increasing a traffic capacity in cell packet switched traffic capacity. The traffic load, which is measured as the number of packet channels set-up, is determined and the current load is re-distributed to another processor if necessary.

### SUMMARY

The present invention meets a problem related to a cellular radio communication system and, in particular, to a cellular radio communication system that includes a pool of core network nodes that are arranged to serve an access network.

The problem is to find methods and means that consider the future load when the load is estimated and distributed among core network nodes in the pool of core network nodes.

In light of the foregoing, a primary object of the present invention is to provide methods and means that consider the future load in the core network nodes when the load is estimated and distributed among the core network nodes in the pool. This object is solved by the teaching of the independent claims. Further preferred embodiments are claimed in the dependent claims.

Accordingly, the present invention provides a method for load distribution.

The present invention further provides a network node for utilising the method according to the present invention.

A system for utilising the method according to the present invention is also provided.

An advantage with the present invention is that the current load as well as the future load of the core network nodes are considered when the load is estimated and distributed.

Another advantage is that the performance of the estimation and the load distribution is not sensitive for random or temporary variations in the load.

A further advantage is that no excessive measurements that can cause extra signalling load and/or overhead in the cellular system need to be used when the load is estimated and distributed.

A still further advantage is that the load is distributed in a simple and robust way.

### BRIEF DESCRIPTION OF THE DRAWINGS

Figure 1 is illustrating a view of a known GSM system.
Figure 2a is illustrating a view of a first cellular radio communication system with a pool of core network nodes.
Figure 2b is illustrating a view of a second cellular radio communication system with a pool of core network nodes.
Figure 3 is illustrating a flow chart of a first embodiment of the method according to the present invention.
Figure 4 is illustrating a flow chart of a second embodiment of the method according to the present invention.
Figure 5 is illustrating a flow chart of a third embodiment of the method according to the present invention.
Figure 6 is illustrating a flow chart of a fourth embodiment of the method according to the present invention.
Figures 7 and 8 are illustrating flow charts associated with a fifth embodiment of the method according to the present invention.
Figure 9 is illustrating a simplified block diagram of a control node and an MSC/VLR according to the present invention.

### DETAILED DESCRIPTION OF EMBODIMENTS

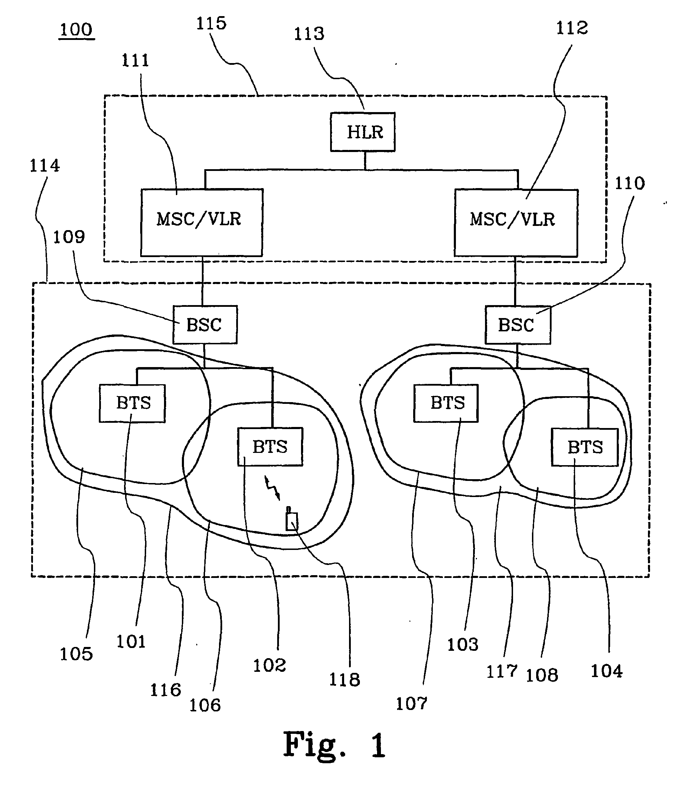

Figure 1 illustrates a simplified view of a known GSM system 100. The GSM system 100 includes four Base Transceiver Stations (BTS) 101-104, which are serving one cell 105-108 each. BTS 101 and 102 are connected to a first Base Station Controller (BSC) 109, i.e. a first control node, and BTS 103 and 104 are connected to a second Base Station Controller (BSC) 110, i.e. a second control node. The first BSC is connected to a first Mobile Switching Centre/Visiting Location Register (MSC/VLR) 111 and the second BSC 110 is connected to a second Mobile Switching Centre/Visiting Location Register (MSC/VLR) 112. Cells 105 and 106 cover the MSC Service Area 116 of MSC/VLR 111 and cells 107 and 108 cover the MSC Service Area 117 of MSC/VLR 112. Both MSC/VLR 111 and 112 are connected to a Home Location Register (HLR) 113. The BTS's 101-104 and BSC's 109-110 are access network nodes and part of the access network 114 and the MSC/'VLR's 111-112 and HLR 113 are core network nodes and part of the core network 115. A mobile station 118 is also illustrated in cell 106.

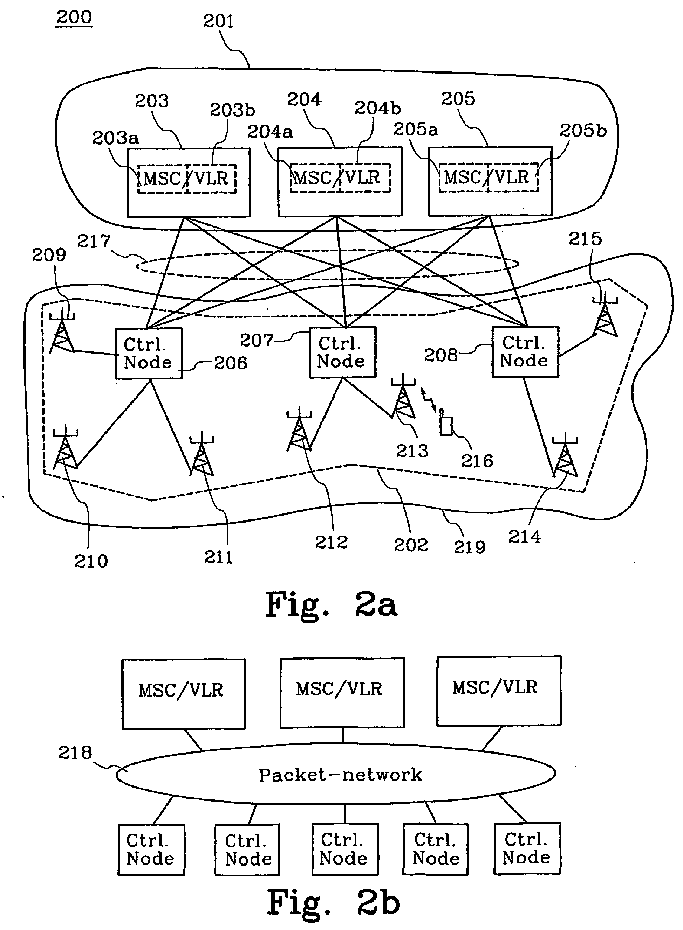

Figure 2a illustrates a simplified view of an example of a cellular radio communication system 200 with a pool of core network nodes 201 connected to an access network 202. The pool of core network nodes 201 includes three MSC/VLR's 203-205 (that belong to the core network of the system 200). The three MSC/VLR's in the pool 201 are connected to three control nodes (Ctrl nodes) 206-208 in the access network 202. The control nodes 206-208 can, as an example, be Base Station Controllers in a GSM-system or Radio Network Controllers in a UMTS-system. The control nodes 206-208 are connected to a number of base stations 209-215, i.e. Base Transceiver Stations in a GSM system or Node B's in a UMTS system. The three MSC/VLR's in the pool 201 supports an MSC-pool service area 219 that includes all the cells (not illustrated) supported by the base stations 209-215. Other parts of the access and core network are not illustrated in figure 2a for simplicity. The connection 217 between the MSC/VLR's 203-205 and the control nodes 206-208 may be arranged by circuit connections 217 as illustrated in figure 2a or by a packet network 218, e.g. an IP network, as illustrated in figure 2b. All control nodes 206-208 in the access network 202 can access any one of the MSC/VLR's 203-205 in the pool 201 and vice versa. A mobile station 216, which is in communication with the control node 207 via base station 213, is also illustrated in figure 2a. The MSC part 203a, 204a and 205a and the VLR part 203b, 204b and 205b of the MSC/VLR's 203-205 in figure 2a are illustrated as dashed rectangles.

As previously stated, it is common to combine each MSC with a VLR into an MSC/VLR. This means that each MSC has its own VLR, which can be physically integrated with the MSC as illustrated in figure 2a. The VLR can also be arranged close by or remotely from the MSC. Hence, by MSC/VLR is not only meant MSC's and VLR's that are arranged in the same physical node but also MSC's and VLR's that are arranged as physically separated but logically combined units.

The inventive solution is to use the number of mobile stations that are registered in the VLR to characterise the load of the corresponding MSC, either as the occupancy count (the VLR occupancy) or as the idle count (the VLR idle count). It is also possible to use a combination of the occupancy and idle count. The number of registered mobile stations in the VLR's does not change so often over time but only as mobile stations enter and leave the area covered by the pool of MSC/VLR's (i.e. the MSC-pool service area). This number is therefore long term filtered by nature. Moreover, it is precisely these mobile stations that will generate all future load, hence the number of registered mobile stations in the VLR's is a measure of the potential for future load in the MSC's. In other words, this number also constitutes a prediction of future loads. The idea with the occupancy/idle count can also be used for other types of core network nodes where the number of registered mobile stations, users or used services can be used as an occupancy count, whereby the load in the current core network node is characterised by the occupancy/idle count.

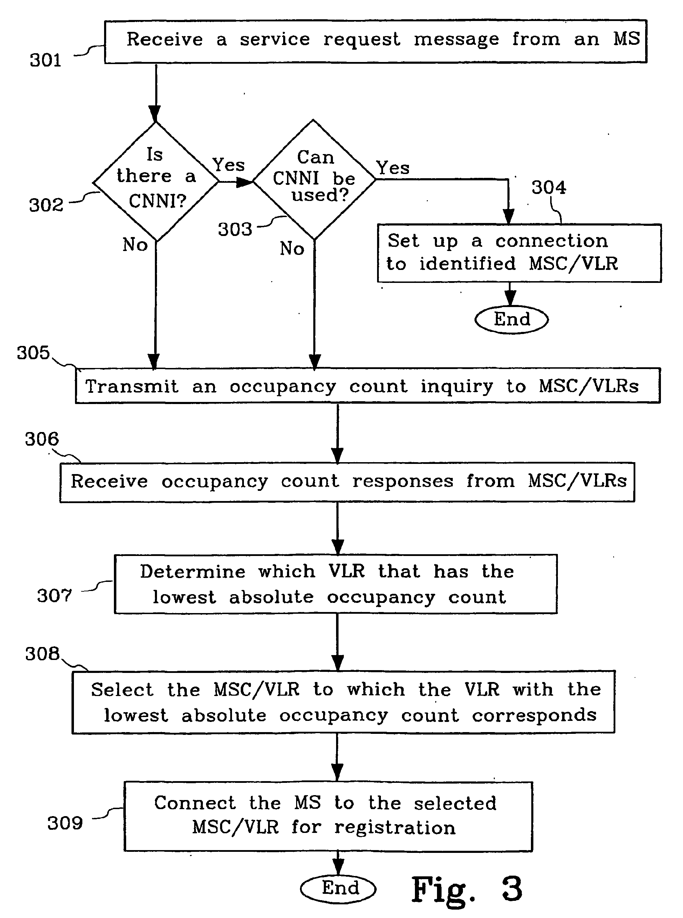

Figure 3 illustrates a flowchart of a first embodiment of a load distribution method according to the present invention. The method is applied in the system in figure 2a with the pool of MSC/VLR's 201 and uses absolute occupancy count values (OCV's) to estimate the load in the MSC/VLR's 203-205. MSC/VLR's 203-205 have been allocated a number of core network node identifiers (CNNI's) that can be used by the control nodes 206-208 to identify each MSC/VLR in the pool. The current OCV's are 50000 in VLR 203b, 75000 in VLR 204b and 200000 in VLR 205b.

According to a step 301 in figure 3, the control node 207 receives a "layer 3 service request message" from mobile station 216 (the abbreviation MS in figure 3 is used for mobile station).

According to a step 302, the control node 207 determines if the mobile station 216 has a CNNI (which can be included in the "layer 3 service request message"). The method continues with a step 305 below if the mobile station lacks a CNNI.

According to a step 303, the control node 207 determines if the CNNI can be used by the control node to identify one of the MSC/VLR's in the (current) pool 201, i.e. to find a core network node address to one of the MSC/VLR's in the pool. If not, the method continues with the step 305 below. The control node might not be able to use the CNNI if it is invalid or if it has been received from an MSC/VLR in another pool of MSC/VLR's.

According to a step 304, the control node sets up a connection to the identified MSC/VLR in the pool 201. The connection is used for the "layer 3 service request message" and subsequent messages in the same signalling session. The method is then ended.

According to step 305, the control node 207 transmits an occupancy count inquiry (OCI) to MSC/VLR's 203, 204 and 205 respectively.

According to a step 306, the control node receives occupancy count responses (OCR's) with occupancy count values (OCV's) from the three MSC/VLR's 203, 204 and 205, i.e. OCV=50000 from VLR 203b, OCV=75000 from VLR 204b and OCV=200000 from VLR 205b. The OCV is one example of core network node data (CNN-data) that the control nodes can collect from the MSC/VLR's in the system. The OCV's are stored in a memory in the control node 207. The previous step 305 above is omitted if the CNN-data is automatically "pushed" out from Load Distribution units in the MSC/VLR's to the control nodes, i.e. without any OCI. See the text in connection with the description of the Load Distribution unit 904 further on.

According to a step 307, the control node determines which one of the VLR's that has the lowest absolute OCV. In this example it is VLR 203b with an OCV of 50000 that has the lowest absolute OCV. If two or more VLR's have an OCV that are equal to the lowest OCV, the control node randomly selects one of these as the VLR with the lowest absolute OCV.

According to a step 308, the control node selects the MSC/VLR that corresponds to the VLR with the lowest absolute OCV, as determined in step 307, as the MSC/VLR that should register and handle the mobile station 216 in the pool 201. In this example, it means that the control node 207 selects MSC/VLR 203. Hence, the MSC/VLR 203 is estimated by the control node to be the least loaded MSC/VLR in the pool for the moment.

According to a step 309, the control node 207 connects the mobile station 216 to MSC/VLR 203 so that it can be registered in the corresponding VLR 203b. The MSC/VLR 203 gives one of its CNNI's to the mobile station 216 so that all future communication to/from the mobile station 216 can be directed to MSC/VLR 203, as long as the mobile station 216 remains in the MSC-pool service area 219. The VLR 203b gets the usual subscriber information, e.g. the IMSI, from the previous VLR or the HLR according to well-known methods.

The control node 207 has by utilising this method distributed both the current and the future load of the mobile station 216 to MSC/VLR 203 in the pool in a very simple and robust way.

The control node 207 uses immediately obtained information in steps 305-306 above, i.e. it collects the information about OCV's from the VLR's just before it is going to connect a mobile station to an MSC/VLR in the pool for the first time. An alternative to the use of immediately obtained information is described later on.

Each MSC/VLR in the pool 201 can under a certain traffic model serve a maximum number of mobile stations. This maximum value can be different for different MSC/VLR's in the pool 201 due to different hardware and/or software in the MSC/VLR's. A value corresponding to the Maximum Number of Mobile Stations (MNMS) can therefore be determined for each MSC/VLR in the pool 201. This parameter is stored in each control node (and/or in each MSC/VLR) and can be fixed or dynamically adjusted as required. The traffic model can be any suitable traffic model that is used for cellular radio systems. In general, different traffic models will apply to different markets and traffic models will change over time.

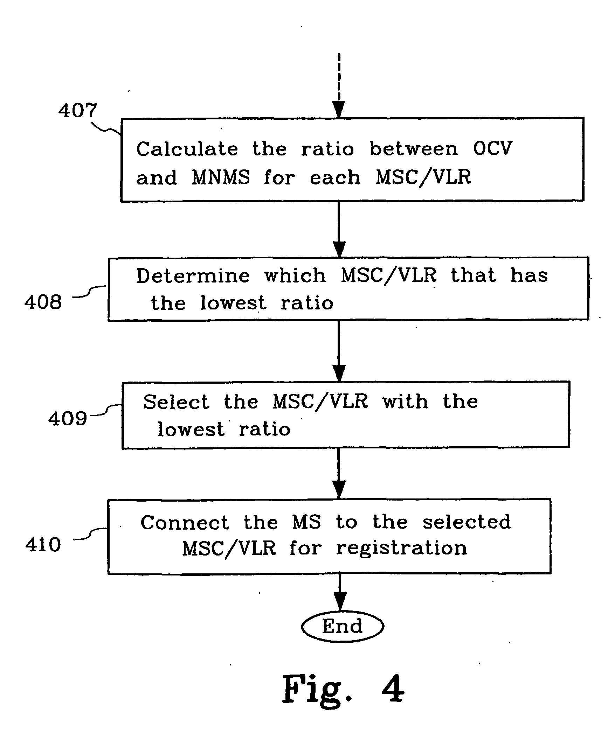

Figure 4 illustrates a flowchart of a second embodiment of the load distribution method according to the present invention. The method is applied in the system that is illustrated in figure 2a with the pool of MSC/VLR's 201 and uses relative OCV's to estimate the load in the MSC/VLR's 203-205. The same preconditions apply as when the first embodiment above started and the MNMS values for the MSC/VLR's are set to be 100000 for MSC/VLR 203, 200000 for MSC/VLR 204 and 500000 for MSC/VLR 205.

Steps 401-406 in the second embodiment are equal to steps 301-306 in the first embodiment, according to figure 3, and will for simplicity not be described again. The OCR's received in step 406 includes the MNMS values as well as the OCV's if the MNMS values are stored in the MSC/VLR's. Hence, an MNMS value is a further example of a CNN-data that the control nodes can collect from the MSC/VLR's in the system.

According to a step 407, the control node 207 calculates the ratio (R1) between the OCV's (received in step 406) and the MNMS values for each MSC/VLR in the pool, i.e. R1=OCV/MNMS. The R1 ratios in this case are 0.5 for MSC/VLR 203, 0.375 for MSC/VLR 204 and 0.4 for MSC/VLR 205.

According to a step 408, the control node determines which one of the MSC/VLR's in the pool 201 that has the lowest relative OCV, i.e. the lowest R1 ratio, by comparing the R1 ratios from step 407 above. In this example it is MSC/VLR 204 with an R1 ratio of 0.375 that has the lowest relative OCV. If two or more MSC/VLR's have R1 ratios that are equal to the lowest R1 ratio, is the MSC/VLR with the highest MNMS value among these selected as the MSC/VLR with the lowest relative OCV. If two or more MSC/VLR's have R1 ratios that are equal to the lowest R1 ratio and also equal MNMS values, is an MSC/VLR among these selected randomly.

According to a step 409, the control node 207 selects the MSC/VLR, with the lowest relative OCV, as determined in step 408, as the MSC/VLR that should register and handle the mobile station 216 in the pool 201. In this example, it means that the control node 207 selects MSC/VLR 204. Hence, the MSC/VLR 204 is estimated, by the control node 207, to be the least loaded MSC/VLR in the pool for the moment.

According to a step 410, the control node 207 connects the mobile station 216 to MSC/VLR 204 so that it can be registered in the corresponding VLR 204b. The MSC/VLR 204 gives one of its CNNI's to the mobile station 216 so that all future communication to/from the mobile station 216 can be directed to MSC/VLR 204 as long as the mobile station remains in the MSC-pool service area 219. The VLR 204b gets the usual subscriber information, e.g. the IMSI, from the previous VLR or the HLR according to well-known methods.

The control node 207 has by utilising this method distributed both the current and the future load of the mobile station 216 to MSC/VLR 204 in the pool by considering both the occupancy count and the different traffic capacities in the MSC/VLR's.

An alternative to steps 405-406 where the control node 207 uses periodically obtained information instead of immediately obtained information is described later on.

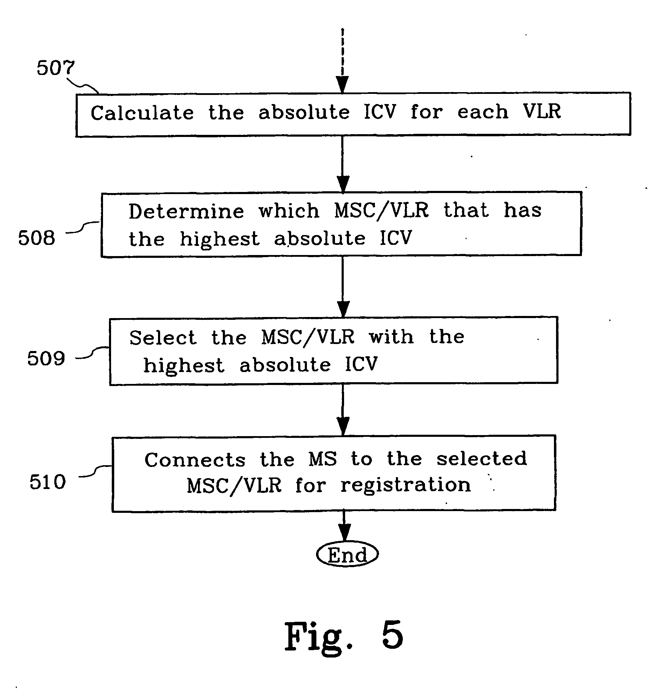

Figure 5 illustrates a flowchart of a third embodiment of the load distribution method according to the present invention. The method is applied in the system that is illustrated in figure 2a with the pool of MSC/VLR's 201 and uses absolute idle count values (ICV's) that are derived from OCV's and MNMS's to estimate the load in the MSC/VLR's 203-205. The same preconditions apply as when the second embodiment above started.

Steps 501-506 in the third embodiment are equal to steps 301-306 in the first embodiment, according to figure 3, and will for simplicity not be described again. The OCR's received in step 506 includes the MNMS values as well as the OCV's if the MNMS values are stored in the MSC/VLR's.

According to a step 507, the control node calculates the ICV's from the OCV's (received in step 506) and the MNMS values for each MSC/VLR in the pool, i.e. ICV=MNMS-OCV. The ICV's in this example are 50000 for MSC/VLR 203, 125000 for MSC/VLR 204 and 300000 for MSC/VLR 205.

According to a step 508, the control node determines which one of the MSC/VLR's in the pool that has the highest absolute ICV by comparing the values from step 507 above. In this example it is MSC/VLR 205 with an ICV of 300000 that has the highest absolute ICV. If two or more MSC/VLR's have ICV's that are equal to the highest ICV value, the VLR with the highest MNMS value among these is selected as the MSC/VLR with the highest absolute ICV. If two or more MSC/VLR's have ICV's that are equal to the highest ICV value and also equal MNMS values, is one MSC/VLR among these selected randomly.

According to a step 509, the control node 207 selects the MSC/VLR with the highest absolute ICV, as determined in step 508, as the MSC/VLR that should register and handle the mobile station 216 in the pool 201. In this example, it means that the control node 207 selects MSC/VLR 205. Hence, the MSC/VLR 205 is estimated by the control node 207 to be the least loaded MSC/VLR in the pool for the moment.

According to a step 510, the control node 207 connects the mobile station 216 to MSC/VLR 205, so that it can be registered in the corresponding VLR 205b. The MSC/VLR 205 gives one of its CNNI's to the mobile station 216 so that all future communication to/from the mobile station 216 can be directed to MSC/VLR 205 as long as the mobile station remains in the MSC-pool service area 219. The VLR 205b gets its usual subscriber information, e.g. the IMSI, from the previous VLR or the HLR according to well-known methods.

An alternative to steps 505-506 where the control node 207 uses periodically obtained information instead of immediately obtained information is described later on.

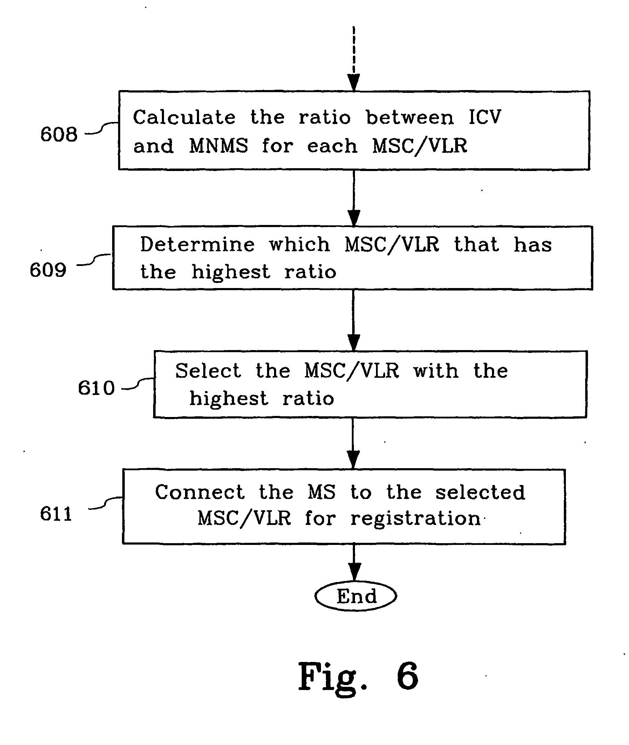

Figure 6 illustrates a flowchart of a fourth embodiment of the load distribution method according to the present invention. The method is applied in the system that is illustrated in figure 2a with the pool of MSC/VLR's 201 and uses relative ICV's that are derived from the OCV's and MNMS's to estimate the load in the MSC/VLR's 203-205. The same preconditions apply as when the second embodiment above started.

Steps 601-607 in the fourth embodiment are equal to steps 501-507 in the third embodiment, according to figure 5, and will for simplicity not be described again.

According to a step 608, the control node 207 calculates the ratio (R2) between the ICV's (calculated in step 607) and the MNMS's for each MSC/VLR in the pool, i.e. R2=ICV/MNMS. The R2 ratios in this case are 0.5 for MSC/VLR 203, 0.625 for MSC/VLR 204 and 0.6 for MSC/VLR 205.

According to a step 609, the control node 207 determines which one of the MSC/VLR's in the pool that has the highest relative ICV, i.e. the highest R2 ratio, by comparing the R2 ratios from step 608 above. In this example it would be MSC/VLR 203 with an R2 ratio of 0.5 that has the highest relative ICV. If two or more MSC/VLR's have R2 ratios that are equal to the highest R2 ratio, the VLR with the highest MNMS value among these is selected as the MSC/VLR with the highest relative ICV. If two or more MSC/VLR's have R2 ratios that are equal to the highest R2 ratio and also equal MNMS values, is an MSC/VLR among these selected randomly.

According to a step 610, the control node 207 selects the MSC/VLR with the highest relative ICV, as determined in step 609, as the MSC/VLR that should register and handle the mobile station 216 in the pool 201. In this example, it means that the control node 207 selects MSC/VLR 203. Hence, the MSC/VLR 203 is estimated by the control node 207 to be the least loaded MSC/VLR in the pool for the moment.

According to a step 611, the control node 207 connects the mobile station 216 to MSC/VLR 203 so that it can be registered in the corresponding VLR 203b. The MSC/VLR 203b gives one of its CNNI's to the mobile station 216 so that all future communication to/from the mobile station 216 can be directed to MSC/VLR 203 as long as the mobile station remains in the MSC-pool service area 219. The VLR 203b gets the usual subscriber information, e.g. the IMSI, from the previous VLR or the HLR according to well-known methods.

An alternative to steps 605-606 where the control node 207 uses periodically obtained information instead of immediately obtained information is described below.

In the first to fourth embodiments, according to figures 3-6 above, it was stated that there is an alternative to the use of immediately obtained information to collect the OCV's and, if needed, MNMS values in the control nodes. The alternative is to use periodically obtained information that are collected at predetermined time intervals to store and update a VLR occupancy table in the control nodes. The process to collect OCV's and, if needed, MNMS values (e.g. by an OCI) from VLR's at predetermined time intervals and to update the VLR occupancy tables in the control nodes is called load information update (LIU). The LIU's are performed in a "background" process that is controlled by e.g. a timer or a counter. The timer can, as an example, start a LIU every 10^{th} seconds. Similarly, the counter can, as an example, start a LIU every 100^{th} time the control node selects an MSC/VLR to a mobile station for registration. It is also possible to combine the timer and the counter so that they start a LIU every 100 time the control node selects an MSC/VLR to a mobile station for registration but at least every 10^{th} second. The timer and/or counter may be arranged in background processes either in the MSC/VLR's (to make them transmit OCR's to the control nodes without any action from the control nodes), or in the control nodes (to transmit OCI's to the MSC/VLR's). A counter placed in the MSC/VLR may preferably operate on load rather than events and may, e.g., send OCR's every time the OCV has changed by 10% (i.e. a threshold of 10%). Also, the start threshold may depend on the absolute value, e.g. such that the threshold is lowered the higher the load. As an example, thresholds may be 10% if the load is less than 50%, 5% if the load is 51-60%, 2.5% if the load is 61-70 and 1% if the load is more than 70%.

The use of periodically obtained information, as described above, may lead to a "bursty" load distribution, where one MSC/VLR at the time is loaded with a number of new mobile stations (a "load shock"), e.g. if the rate of new mobile stations is much higher than the rate of LIU's. This is because one and the same MSC/VLR is selected as the least loaded one for the whole interval between two LIU's.

This can be avoided by introducing a distribution-vector (d-vector), from which different MSC/VLR's are selected as the least loaded ones between two LIU's. The frequency at which a particular MSC/VLR is selected as the least loaded one is determined by its load according to the last LIU; the lower the load relative to other MSC/VLR's, the higher is the selection frequency. This means that the load can be spread between many MSC/VLR's between two LIU's such that even loads will be obtained in the long term, even if the LIU's are few compared to the number of new mobile stations that are to be registered in the system. The d-vector will also result in that equally loaded MSC/VLR's in a pool are evenly selected by the control nodes when LIU's are made very seldom, i.e. if a long predetermined time interval is used for the periodically obtained OCV's.

The basic idea of the d-vector is to select a set of target MSC/VLR's and to select each one of these in proportion to how "attractive" they are. In figure 2a, all three MSC/VLR's 203-205 are operational and therefore potential candidates for new mobile stations that are to be registered in the pool 201. The d-vector includes a number CNN-entries that corresponds to the number of choices for the selection of each MSC/VLR. Each CNN-entry identifies an MSC/VLR. A d-vector that corresponds to 8 different choices will have 8 CNN-entries, which are used cyclically. If, in a first example, MSC/VLR 203 is most attractive, MSC/VLR 204 is less attractive, and MSC/VLR 205 the least attractive, the 5 out of 8 choices could be MSC/VLR 203, 2 out of 8 choices could be MSC/VLR 204 and 1 out of 8 choices could be MSC/VLR 205. This would result in a d-vector with five MSC/VLR 203 CNN-entries, two MSC/VLR 204 CNN-entries and one MSC/VLR 205 CNN-entry. The CNN-entries in the d-vector are "shuffled" so that not all CNN-entries identifying the same MSC/VLR's are arranged in a consecutive order in the d-vector. This means that the d-vector in this example may look like [203,204,203,205,203,204,203,203]. The d-vector is provided with a pointer to indicate one of the CNN-entries.

In general, any number of CNN-entries can be used in the d-vector, the larger number the better is the degree by which load distribution can be controlled. The d-vector is updated after each LIU, i.e. when new OCV, ICV or possibly MNMS information is available.

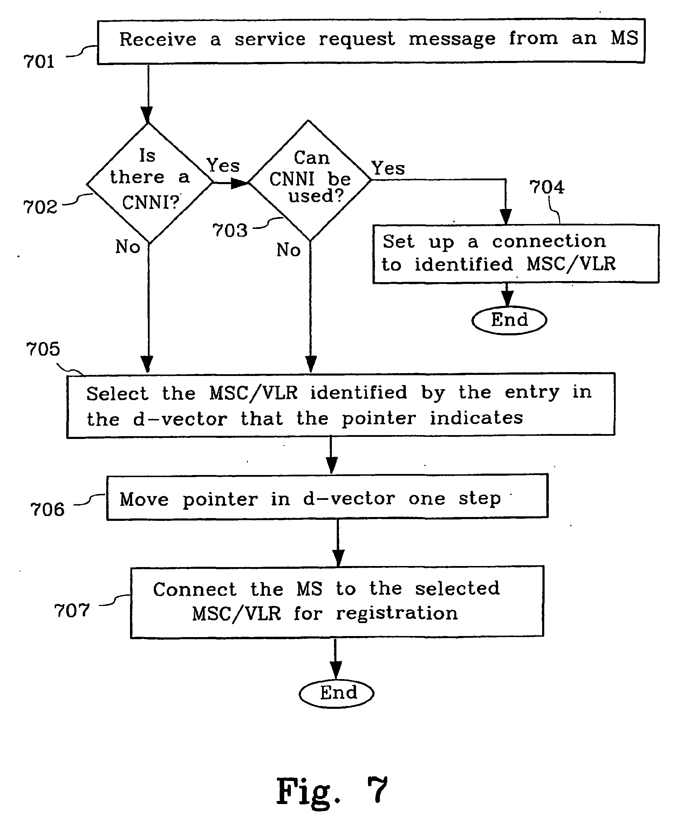

Figure 7 illustrates a flowchart of a fifth embodiment of the load distribution method according to the present invention. The control node 207, in figure 2a, makes a selection of a least loaded MSC/VLR in the pool 201 with the help of the above-mentioned d-vector [203,204,203,205,203,204,203,203]. The pointer is indicating the first CNN-entry 203 that identifies MSC/VLR 203. Steps 701 to 704 are the same as in the first to fourth embodiments and will for simplicity not be described again.

According to a step 705, the control node 207 selects the MSC/VLR that is identified by the CNN-entry indicated by the pointer in the d-vector. This means that the MSC/VLR 203 is selected and that MSC/VLR 203 is estimated to be the least loaded MSC/VLR in the pool for the moment.

According to a step 706, the pointer advances (moves) one step to the next CNN-entry 204 in the d-vector, i.e. the one identifying MSC/VLR 204. If the pointer, at the time of the selection in step 705, had been indicating the last CNN-entry in the d-vector (i.e. the fifth 203) it would have been moved to the first entry (i.e. the first 203) in this step.

According to a step 707, the control node connects the mobile station to the selected MSC/VLR, i.e. MSC/VLR 203 in this case, so that the mobile station can be registered in the corresponding VLR.

As stated before, the attractiveness of the MSC/VLR's determines the proportion between the number of CNN-entries of each MSC/VLR in the d-vector. The number of mobile stations that are registered in the VLR's are used to characterise the load of the corresponding MSC/VLR as occupancy counts (OCV's) or idle counts (ICV's) as described in the embodiments above. These OCV's or ICV's are then used to determine the number of CNN-entries that each MSC/VLR should have in the d-vector, i.e. the attractiveness of each MSC/VLR in the pool.

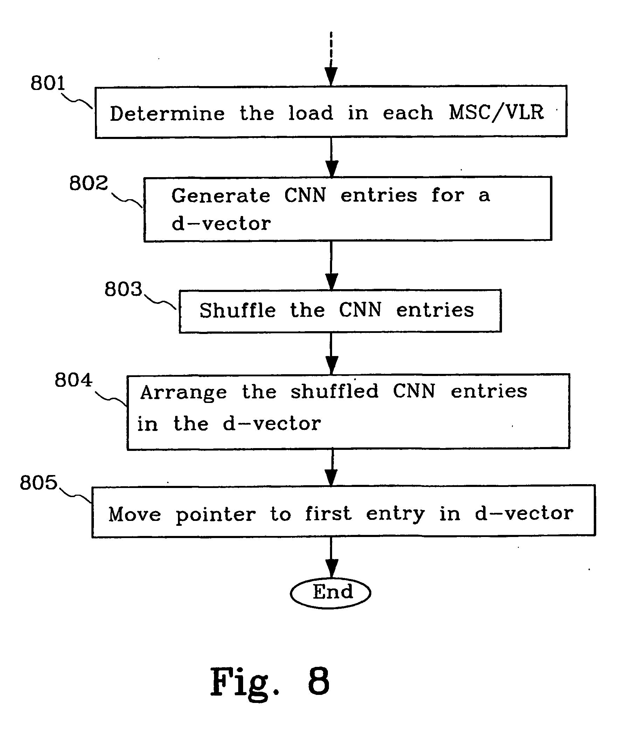

Figure 8 illustrates a flowchart of how a d-vector is created or updated after a load information update. This can as an example be made in the control nodes in figure 2a or in a separate node dedicated for the d-vector.

According to a step 801, the load in each MSC/VLR is determined according to one of the four embodiment above. This includes the collection of CNN-data and the estimation of the load with the help of the absolute/relative OCV or ICV of each MSC/VLR in the pool.

According to a step 802, the CNN-entries to be inserted in the d-vector are generated. How the CNN-entries are determined is described in more detail below with references to the previous embodiments.

According to a step 803, the CNN-entries in the d-vector are shuffled.

According to a step 804, the shuffled CNN-entries are arranged in the d-vector. This is described more below.

According to a step 805, the pointer in each d-vector is moved to the first CNN-entry. The d-vector is now ready to be used until the next LIU, where a d-vector with new entries will be generated. Equal OCV's/ICV's for the MSC/VLR's in the pool 201 are achieved even if the frequency of the LIU's is set to a low value, i.e. the load balance between the MSC/VLR's in the pool 201 is maintained between two LIU's.

With reference to the first embodiment of the method and the use of absolute OCV's, the OCV's are 50000, 75000, and 200000 respectively. The proportion of new mobile stations to MSC/VLR j are max OCV/OCV(j), i.e. 20/5=4, 20/7.5=2.67 and 20/20=1 for MSC/VLR 203, 204 and 205 respectively. With an *N*=8 the d-vector thus contain *N**4/(4+2.67+1)=4.17 CNN-entries of 203, *N**2.67/(4+2.67+1)=2.78 CNN-entries of 204 and *N**1/(4+2.67+1)=1.04 CNN-entries of 205. Truncating the numbers results in four CNN-entries of 203, two CNN-entries of 204 and one CNN-entry of 205, while rounding result in four CNN-entries for 203, three CNN-entries of 204 and one CNN-entry of 205. Shuffling the CNN-entries can as an example result in a vector like [203,204,203,205,203,204,203] with truncation (4+2+1=7 entries) and [203,204,203,205,203,204,203,204] with rounding (4+3+1=8 entries). Note that the truncating means that the last CNN-entry in the d-vector is not used.

With reference to the second embodiment of the method and the use of relative OCV's, the MNMS's are 100000, 200000 and 500000 and the relative OCV's are 0.5, 0.375 and 0.4 respectively. The proportions of new mobile stations are 0.5/0.5=1, 0.5/0.375=1.33 and 0.5/0.4=1.25 respectively. The d-vector thus contain N*1/(1+1.33+1.25)=2.23 CNN-entries of 203, N*1.33/(1+1.33+1.25)=2.96 CNN-entries of 204 and N*1.25/(1+1.33+1.25)=2.79 CNN-entries of 205. Truncation results in 2, 2 and 2 CNN-entries of MSC/VLR 203, 204 and 205 respectively, while rounding results in 2, 3 and 3 CNN-entries. A large number of differently shuffled d-vectors can be created from these CNN-entries, with rounding e.g. [203,204,205,204,205,203,204,205].

With reference to the third embodiment of the method and the use of absolute OCV's, the absolute ICV's are 50000, 125000 and 300000 respectively. The proportion of new mobile stations to MSC/VLR j is ICV(j)/min ICV, i.e. 5/5=1, 12.5/5=2.5 and 30/5=6 for MSC/VLR 203, 204 and 205 respectively. This results in N*1/(1+2.5+6)=0.84 CNN-entries for MSC/VLR 203, N*2.5/(1+2.5+6)=2.12 CNN-entries for MSC/VLR 204 and N*6/(1+2.5+6))=5.05 CNN-entries for MSC/VLR 205. Truncation results in 0, 2 and 5 CNN-entries of 203, 204 and 205 respectively, while rounding results in 1, 2 and 5 CNN-entries. A large number of differently shuffled d-vectors can be created from these CNN-entries, with rounding e.g. [205,203,205,204,205,204,205,205].

With reference to the fourth embodiment of the method and the use of relative ICV's, the relative ICV's are 50/100=0.5, 125/200=0.625 and 300/500=0.6 respectively. The proportions of new mobile stations to the MSC/VLR's are therefore 0.5/0.5=1, 0.625/0.5=1.25 and 0.6/0.5=1.20 respectively. This results in N*1/(1+1.25+1.2)=2.31 CNN-entries for MSC/VLR 203, N*1.25/(1+1.25+1.2)=2.90 CNN-entries for MSC/VLR 203 and N*1.2/(1+1.25+1.2)=2.79 CNN-entries for MSC/VLR 203. Truncation results in 2, 2 and 2 CNN-entries of 203, 204 and 205 respectively, while rounding results in 2, 3 and 3 CNN-entries. A large number of differently shuffled d-vectors can be created from these CNN-entries, with rounding e.g. [205,203,204,205,204, 203,205,204].

Occupancy counts can also be used to prevent the control nodes from adding more load to an MSC/VLR that is about to be closed down or to quickly attract a lot of load (i.e. mobile stations) to a new MSC/VLR that has just become operational in the pool. This is possible by advertising or reporting false occupancy counts to the control nodes, i.e. false OCV values. An OCV that indicates that a first MSC/VLR is "full" (even if that is not really the case) can be used to avoid that more mobile stations are registered in the first MSC/VLR. Similarly, an OCV that indicates that the first MSC/VLR is "empty" (even if that is not really the case) can be used to quickly attract more load, i.e. new mobile stations, to the first MSC/VLR. These false occupancy counts can be set by the operator of the system and/or be a part of a high level feature including automatic "falsification", as required, to achieve certain targets (i.e. to add or subtract load).

The inventive load distribution can also be used in a forced redistribution process where the system moves already registered mobile stations from one or more "old" MSC/VLR's to one or more "new" MSC/VLR's, e.g. if the first MSC/VLR is to be closed down. The CNNI's that the first MSC/VLR's has given to its mobile stations are declared "invalid" in the control nodes. Each time a control node receives a message to/from a mobile station with an invalid CNNI, i.e. a CNNI that identifies the first MSC/VLR, the control node will connect that mobile station to one of the other MSC/VLR's in the pool by using the inventive load distribution. As stated above, the first MSC/VLR can give a false OCV (stating that it is "full") so that its is not chosen again by the control node. This means that the mobile station is registered in a new VLR that corresponds to a new MSC/VLR that takes over from the first MSC/VLR. The first MSC/VLR is in this way gradually "emptied" of mobile stations that have been distributed to the other MSC/VLR's in the pool.

The CNNI's that are to be declared "invalid" in the control nodes can be declared invalid in groups (one group at the time), i.e. not all CNNI's at once, to "smooth" the redistribution process.

Embodiments of a method of estimating the load in a core network node, e.g. in an MSC/VLR, are also described in the description of the load distribution embodiments above. The load is estimated to be equal to the OCV, the R1 ratio, the ICV or the R2 ratio, that are derived from the collected CNN-data.

The OCV, the R1 ratio, the ICV, the MNMS or the R2 ratio, according to the present invention, can be further processed (e.g. by different mathematical operations) in order to achieve different load distribution and estimation characteristics. This can as an example be made by calculating the square root of or the second power of the OCV, R1 ratio, ICV, the MNMS and/or the R2 ratio before the least loaded MSC/VLR is selected or the load in an MSC/VLR is estimated.

It should be noted that a number (or even all) of the steps that are performed by the control node 207 in the above described embodiments of the load distribution and estimation methods could be performed by hardware and/or software arranged outside the actual control node, i.e. in another network node. This network node is connected to the control nodes and the MSC/VLR's in the pool. One example of such a network node is a Media Gateway where the MSC is split into a server and a gateway. It should also be noted that one or more of the functions and steps that are performed by the MSC's in this invention can be implemented in separate nodes or be grouped into a load distribution server. This load distribution server can collect the CNN-data and give tables or reference values to the control nodes.

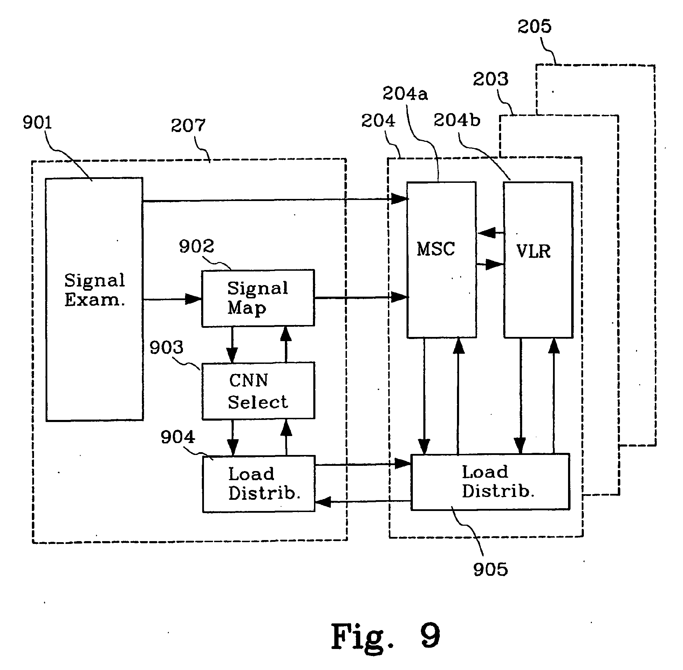

Figure 9 illustrates a simplified block diagram of the control node 207 and the MSC/VLR 204 in the MSC-pool 201. The figure illustrates those parts that are needed to understand the invention. Other parts of the control node and the MSC/VLR are omitted for simplicity. The control node 207 includes a Signal-Exam unit 901 connected to a Signal-Map unit 902, a CNN-Select unit 903 connected to the Signal-Map unit 902 and a Load-Distribution unit 904 connected to the CNN-Select unit 903. As stated before, the control node 207 is an example of an access network node and the MSC/VLR 204 is an example of a core network node (CNN) that can be used for utilising the inventive method.

The MSC/VLR 204 includes the MSC 204a. and the VLR 204b, which are connected to a Load-Distribution unit 905. The MSC 204a is connected to the Signal-Exam unit 901 and the Signal-Map unit 902. The Load-Distribution unit 905 in the MSC/VLR 204 is connected to the Load-Distribution unit 904 in the control node 207. Each one of the MSC/VLR's in the MSC-pool 201 includes an MSC, a VLR and a Load-Distribution unit as in MSC/VLR 204.

The Signal-Exam unit 901 catches messages without connections, i.e. the ones that carry "layer 3 service request". While other messages are forwarded on their connections, the trapped "layer 3 service request"-messages are forwarded to the Signal-Map unit 902.

The Signal-Map unit 902 maintains two tables. The first one relates CNNI's to CNN's, i.e. to MSC/VLR 203-205 in this example, and the second one relates CNN's to core network node addresses, i.e. the addresses to MSC/VLR 203-205. The two tables can also be combined into one. Messages which can be forwarded according to CNNI's, are forwarded by first translating the CNNI to a CNN and then the CNN to a core network node address. Messages without a CNNI or with an invalid CNNI can be forwarded to any one of the MSC/VLR's in the MSC-pool 201. The choice of an MSC/VLR is made by the CNN-Select unit 903 according to one of the above-described embodiments of the method.

The CNN-Select unit 903 contains the logic required to select an MSC/VLR based on the information provided by the Load-Distribution unit 904. For example it may be able to select the MSC/VLR with the lowest absolute OCV etc. according to figures 3-7. Moreover, it may ask the Load-Distribution unit 904 for advice or report its decisions to the Load-Distribution unit 904. The selection procedure is invoked each time the Signal-Map unit 902 prompts for a new MSC/VLR. An advice procedure would be activated every time, if immediately obtained information is used, whereas the reporting procedure may be invoked after a certain number of requests (e.g. after every request or every 10^{th} request), after a certain time, or a combination of the two if periodically obtained information is used. In a more advanced version, the previously described d-vector is used in the CNN-select unit. Then, each time the CNN-Select unit is prompted for a new MSC/VLR, is the MSC/VLR that is identified by the CNN-entry indicated by the pointer chosen after which the pointer is advanced to the next CNN-entry in the d-vector. The CNN-entries can as, an example, include the actual core network node addresses to the MSC/VLR that they represent.

The Load-Distribution unit 904 communicates as required with the Load-Distribution units 905 of all MSC/VLR's in the MSC-pool 201 in order to obtain (i.e. collect) their latest load figures, e.g. their occupancy counts. Data may be pushed to or pulled from the load distribution unit 904. By pushing means that information is sent "automatically" from the Load-Distribution units 905 in all of the MSC/VLR's, and by pulling means that it is the Load-Distribution unit 904 in the control node 207 which prompts for information, e.g. according to an access counter, a timer, or both. Both pushing and pulling means that CNN-data is collected from the MSC/VLR's in the pool.

Similarly, the Load-Distribution unit 905 in the MSC/VLR's communicates with all control nodes, i.e. 206-208 in this example, to distribute their latest load figures, by regular subscription (referred to as "push" above) or on demand as required (referred to as "pull" above). The VLR 204b stores data about OCV and the MSC 204a stores data about the MNMS.

The invention can, in general, also be used to determine the overall load situation in a pool of core network nodes or in a network. For example, if the numbers of mobile stations that are registered in the VLR's were generally high, this would indicate that the network is near congestion and should be expanded.

The invention can be partially implemented as software in at least one microprocessor.

## Claims

1. A method for load distribution in a radio communication system (200), where said system (200) includes at least one access network (202) and at least two core network nodes (203-205), and where said at least one access network (202) includes a first control node (206-208) connected to said at least two core network nodes (203-205), and where a mobile station (216) is to be registered in one of said at least two core network nodes (203-205),
**characterised in that** said method includes the following steps:
collecting (305-306,801) CNN-data from said at least two core network nodes (203-205) in at least one network node (206-208) in said system (200), wherein said CNN-data includes at least the number of registered mobile stations in said at least two core network nodes (203-205);
determining (307-308,407-409,507-509,608-610,705-706, 801-805) with the help of said CNN-data which one of said at least two core network nodes (206-208) is the least loaded core network node; and
connecting (309,410,510,611,707) said mobile station (216) to said least loaded core network node (206-208) for said registration.

2. The method as claimed in claim 1, wherein said step of determining the least loaded core network node includes the following steps:
determining (307) which one of said at least two core network nodes that has the lowest number of registered mobile stations; and
selecting (308) the core network node with the lowest number of registered mobile stations as the least loaded core network node.

3. The method as claimed in claim 1, wherein said step of determining the least loaded core network node includes the following steps:
calculating (407) a first ratio between said number of registered mobile stations and the maximum number of mobile stations that said core network nodes can support for each one of said at least two core network nodes;
determining (408) which one of said core network nodes that has the lowest first ratio; and
selecting (409) the core network node with the lowest first ratio as said least loaded core network node.

4. The method as claimed in claim 1, wherein said step of determining the least loaded core network node includes the following steps:
calculating (507) the idle count value for each one of said at least two core network nodes by subtracting said number of registered mobile stations from the maximum number of mobile stations that said core network nodes can support;
determining (508) which one of said core network nodes that has the highest idle count value; and
selecting (509) the core network node with the highest idle count value as said least loaded core network node.

5. The method as claimed in claim 1, wherein said step of determining the least loaded core network node includes the following steps:
calculating (608) a second ratio between the idle count value and the maximum number of mobile stations that said core network nodes can support for each one of said at least two core network nodes, where said idle count value is equal to the maximum number of mobile stations that said core network nodes can support minus said number of registered mobile stations;
determining (609) which one of said core network nodes that has the highest second ratio; and
selecting (610) the core network node with the highest second ratio as said least loaded core network node.

6. The method as claimed in claim 1, wherein said step of determining the least loaded core network node includes the following step:
selecting (705) the core network node that is identified by a first CNN-entry in a distribution vector as said least loaded core network node, wherein said distribution vector includes a pre-determined number of CNN-entries that are determined from said CNN-data.

7. The method as claimed in claim 6, wherein said distribution vector is created according to the following steps:
determining (801) the load in each one of said at least two core network nodes with the help of said CNN-data;
generating (802) a number of CNN-entries for each one of said at least two core network nodes, where said number of CNN-entries are proportional to the load in each core network node and where the total number of CNN-entries equals said pre-determined number of entries in said distribution vector;
shuffling (803) said CNN-entries; and
arranging (804) said shuffled CNN-entries in said distribution vector.

8. The method as claimed in claim 6 or 7, wherein said distribution vector is updated each time said step of collecting CNN-data has been performed.

9. The method as claimed in one of claims 1-8, wherein said step of collecting (305-306,801) said CNN-data is controlled by a timer that determines when said step is to be performed.

10. The method as claimed in one of claims 1-8, wherein said step of collecting (305-306,801) said CNN-data is controlled by a counter that determines when said step is to be performed.

11. The method as claimed in claim 10, wherein said counter starts said step of collecting (305-306,801) said CNN-data every time the number of registered mobiles in one of said at least two core network nodes has changed by a pre-determined percentage.

12. The method as claimed in claim 11, wherein said pre-determined percentage is adjusted for each one of said at least two core network nodes dependent on their load.

13. The method as claimed in one of claims 1-12, wherein said number of registered mobile stations is set to a value that does not correspond to the actual number of registered mobile stations in at least one of said core network nodes.

14. The method as claimed in one of claims 1-13, wherein said at least two core network nodes are MSC/VLR's and where said VLR's contains said CNN-data about said number of registered mobile stations.

15. The method as claimed in one of claims 1-14, wherein said network node is said first control node (206-208).

16. A network node for a radio communication system (200), wherein said system includes at least two core network nodes (203-205) connected to said network node (206-208),
**characterized in that** said network node includes:
means (904) for collecting CNN-data from said at least two core network nodes, wherein said CNN data includes the number of registered mobile stations in said at least two core network nodes; and
means (903) for determining with the help of said CNN-data, which one of said at least two core network nodes (203-205) is the least loaded core network node, wherein the least loaded core network node is determined for connecting a mobile station (216), which is to be registered in one of said at least two core network nodes (203-205), to said least loaded core network node for registration.

17. The network node as claimed in claim 16, wherein said means (903) for determining the least loaded core network node includes means for selecting the core network node with the lowest number of registered mobile stations as the least loaded core network node.

18. The network node as claimed in claim 16, wherein said means (903) for determining the least loaded core network node includes means for selecting the core network node with the lowest ratio between said number of registered mobile stations and the maximum number of mobile stations that said core network nodes can support as said least loaded core network node.

19. The network node as claimed in claim 16, wherein said means (903) for determining the least loaded core network node includes means for selecting the core network node with the highest idle count value as said least loaded core network node.

20. The network node as claimed in claim 16, wherein said means (903) for determining the least loaded core network node includes means for selecting the core network node with the highest ratio between the idle count value and the maximum number of mobile stations that said core network nodes can support for each one of said at least two core network nodes as said least loaded core network node.

21. The network node as claimed in claim 16, wherein said network node includes means for generating (802) a distribution vector with a number of CNN-entries for each one of said at least two core network nodes, and where said number is proportional to the load in each core network node.

22. The network node as claimed in claim 21, wherein said means (903) for determining the least loaded core network node includes means for identifying a specific CNN-entry in said distribution vector as said least loaded core network node.

23. The network node as claimed in one of claims 16-22, wherein said network node is a control node (206-208) and where said control node also includes means (901,902) for connecting a mobile station (216) that is to be registered in said system (200) to said least loaded core network node for registration.

24. A radio communication system including at least two core network nodes (203-205), **characterised in that** said system (200) further includes at least one network node (206-208) according to one of claims 16-23.

## Patentansprüche

1. Verfahren zur Lastverteilung in einem Funkkommunikationssystem (200), wobei das System (200) mindestens ein Zugangsnetz (202) und mindestens zwei Kernnetzknoten (203-205) enthält, und wobei das mindestens eine Zugangsnetz (202) einen ersten Steuerknoten (206-208) enthält, der mit den mindestens zwei Kernnetzknoten (203-205) verbunden ist, und wobei eine Mobilstation (216) in einem der mindestens zwei Kernnetzknoten (203-205) angemeldet werden soll,
**dadurch gekennzeichnet, dass** das Verfahren die folgenden Schritte beinhaltet:
Sammeln (305-306, 801) von CNN-Daten von den mindestens zwei Kernnetzknoten (203-205) in mindestens einem Netzknoten (206-208) in dem System (200), wobei die CNN-Daten mindestens die Anzahl angemeldeter Mobilstationen in den mindestens zwei Kernnetzknoten (203-205) enthalten;
Bestimmen (307-308, 407-409, 507-509, 608-610, 705-706, 801-805) mit Hilfe der CNN-Daten, welcher der mindestens zwei Kernnetzknoten (203-205) der am wenigsten belastete Kernnetzknoten ist; und
Verbinden (309, 410, 510, 611, 707) der Mobilstation (216) mit dem am wenigsten belasteten Kernnetzknoten (203-205) zur Anmeldung.

2. Verfahren nach Anspruch 1, wobei der Schritt des Bestimmens des am wenigsten belasteten Kernnetzknotens die folgenden Schritte beinhaltet:
Bestimmen (307), welcher der mindestens zwei Kernnetzknoten die kleinste Anzahl angemeldeter Mobilstationen aufweist; und
Wählen (308) des Kernnetzknotens mit der kleinsten Anzahl angemeldeter Mobilstationen als den am wenigsten belasteten Kernnetzknoten.

3. Verfahren nach Anspruch 1, wobei der Schritt des Bestimmens des am wenigsten belasteten Kernnetzknotens die folgenden Schritte beinhaltet:
Berechnen (407) für jeden der mindestens zwei Kernnetzknoten eines ersten Verhältnisses zwischen der Anzahl angemeldeter Mobilstationen und der maximalen Anzahl von Mobilstationen, welche der betreffende Kernnetzknoten unterstützen kann;
Bestimmen (408), welcher der Kernnetzknoten das kleinste erste Verhältnis aufweist; und
Wählen (409) des Kernnetzknotens mit dem kleinsten ersten Verhältnis als den am wenigsten belasteten Kernnetzknoten.

4. Verfahren nach Anspruch 1, wobei der Schritt des Bestimmens des am wenigsten belasteten Kernnetzknotens die folgenden Schritte beinhaltet:
Berechnen (507) des Zählwertes der freien Kapazität (Idle Count Value) für jeden der mindestens zwei Kernnetzknoten durch Subtrahieren der Anzahl angemeldeter Mobilstationen von der maximalen Anzahl von Mobilstationen, welche der betreffende Kernnetzknoten unterstützen kann;
Bestimmen (508), welcher der Kernnetzknoten den höchsten Zählwert der freien Kapazität aufweist; und
Wählen (509) des Kernnetzknotens mit dem höchsten Zählwert der freien Kapazität als den am wenigsten belasteten Kernnetzknoten.

5. Verfahren nach Anspruch 1, wobei der Schritt des Bestimmens des am wenigsten belasteten Kernnetzknotens die folgenden Schritte beinhaltet:
Berechnen (608) eines zweiten Verhältnisses zwischen dem Zählwert der freien Kapazität (Idle Count Value) und der maximalen Anzahl von Mobilstationen, welche der betreffende Kernnetzknoten unterstützen kann, für jeden der mindestens zwei Kernnetzknoten, wobei der Zählwert der freien Kapazität gleich der maximalen Anzahl von Mobilstationen, welche der betreffende Kernnetzknoten unterstützen kann, abzüglich der Anzahl angemeldeter Mobilstationen ist;
Bestimmen (609), welcher der Kernnetzknoten das höchste zweite Verhältnis aufweist; und
Wählen (610) des Kernnetzknotens mit dem höchsten zweiten Verhältnis als den am wenigsten belasteten Kernnetzknoten.

6. Verfahren nach Anspruch 1, wobei der Schritt des Bestimmens des am wenigsten belasteten Kernnetzknotens den folgenden Schritt beinhaltet:
Wählen (705) des Kernnetzknotens, welcher durch einen ersten CNN-Eintrag in einem Verteilungsvektor als der am wenigsten belastete Kernnetzknoten **gekennzeichnet** ist, wobei der Verteilungsvektor eine vorgegebene Anzahl von CNN-Einträgen enthält, welche aus den CNN-Daten bestimmt werden.

7. Verfahren nach Anspruch 6, wobei der Verteilungsvektor gemäß den folgenden Schritten erzeugt wird:
Bestimmen (801) der Last in jedem der mindestens zwei Kernnetzknoten mit Hilfe der CNN-Daten;
Erzeugen (802) einer Anzahl von CNN-Einträgen für jeden der mindestens zwei Kernnetzknoten, wobei die Anzahl von CNN-Einträgen proportional zur Last in dem jeweiligen Kernnetzknoten ist und wobei die Gesamtzahl von CNN-Einträgen gleich der vorgegebenen Anzahl von Einträgen in dem Verteilungsvektor ist;
Durchmischen (803) der CNN-Einträge; und
Anordnen (804) der durchmischten CNN-Einträge in dem Verteilungsvektor.

8. Verfahren nach Anspruch 6 oder 7, wobei der Verteilungsvektor jedes Mal aktualisiert wird, wenn der Schritt des Sammelns von CNN-Daten ausgeführt worden ist.

9. Verfahren nach einem der Ansprüche 1-8, wobei der Schritt des Sammelns (305-306, 801) der CNN-Daten durch einen Zeitgeber gesteuert wird, welcher bestimmt, wann der Schritt auszuführen ist.

10. Verfahren nach einem der Ansprüche 1-8, wobei der Schritt des Sammelns (305-306, 801) der CNN-Daten durch einen Zähler gesteuert wird, welcher bestimmt, wann der Schritt auszuführen ist.

11. Verfahren nach Anspruch 10, wobei der Zähler den Schritt des Sammelns (305-306, 801) der CNN-Daten jedes Mal startet, wenn sich die Anzahl angemeldeter Mobiltelefone in einem der mindestens zwei Kernnetzknoten um einen vorgegebenen Prozentsatz geändert hat.

12. Verfahren nach Anspruch 11, wobei der vorgegebene Prozentsatz für jeden der mindestens zwei Kernnetzknoten in Abhängigkeit von ihrer Last angepasst wird.

13. Verfahren nach einem der Ansprüche 1-12, wobei bei mindestens einem der Kernnetzknoten die Anzahl angemeldeter Mobilstationen auf einen Wert eingestellt ist, welcher nicht der tatsächlichen Anzahl angemeldeter Mobilstationen entspricht.

14. Verfahren nach einem der Ansprüche 1-13, wobei die mindestens zwei Kernnetzknoten MSC/VLRs (Mobilvermittlungsstellen/Besucherregister) sind und wobei die VLRs (Besucherregister) die CNN-Daten über die Anzahl angemeldeter Mobilstationen enthalten.

15. Verfahren nach einem der Ansprüche 1-14, wobei der Netzknoten der erste Steuerknoten (206-208) ist.

16. Netzknoten für ein Funkkommunikationssystem (200), wobei das System mindestens zwei Kernnetzknoten (203-205) enthält, die mit dem Netzknoten (206-208) verbunden sind;
**dadurch gekennzeichnet, dass** der Netzknoten enthält:
Mittel (904) zum Sammeln von CNN-Daten von den mindestens zwei Kernnetzknoten, wobei die CNN-Daten die Anzahl angemeldeter Mobilstationen in den mindestens zwei Kernnetzknoten enthalten; und
Mittel (903) zum Bestimmen mit Hilfe der CNN-Daten, welcher der mindestens zwei Kernnetzknoten (203-205) der am wenigsten belastete Kernnetzknoten ist, wobei der am wenigsten belastete Kernnetzknoten zum Verbinden einer Mobilstation (216), welche bei einem der mindestens zwei Kernnetzknoten (203-205) angemeldet werden soll, mit dem am wenigsten belasteten Kernnetzknoten zur Anmeldung bestimmt wird.

17. Netzknoten nach Anspruch 16, wobei die Mittel (903) zum Bestimmen des am wenigsten belasteten Kernnetzknotens Mittel zum Wählen des Kernnetzknotens mit der kleinsten Anzahl angemeldeter Mobilstationen als den am wenigsten belasteten Kernnetzknoten enthalten.

18. Netzknoten nach Anspruch 16, wobei die Mittel (903) zum Bestimmen des am wenigsten belasteten Kernnetzknotens Mittel zum Wählen des Kernnetzknotens mit dem kleinsten Verhältnis zwischen der Anzahl angemeldeter Mobilstationen und der maximalen Anzahl von Mobilstationen, welche der Kernnetzknoten unterstützen kann, als den am wenigsten belasteten Kernnetzknoten enthalten.

19. Netzknoten nach Anspruch 16, wobei die Mittel (903) zum Bestimmen des am wenigsten belasteten Kernnetzknotens Mittel zum Wählen des Kernnetzknotens mit dem höchsten Zählwert der freien Kapazität (Idle Count Value) als den am wenigsten belasteten Kernnetzknoten enthalten.

20. Netzknoten nach Anspruch 16, wobei die Mittel (903) zum Bestimmen des am wenigsten belasteten Kernnetzknotens Mittel zum Wählen des Kernnetzknotens mit dem höchsten Verhältnis zwischen dem Zählwert der freien Kapazität (Idle Count Value) und der maximalen Anzahl von Mobilstationen, welche der Kernnetzknoten unterstützen kann, für jeden der mindestens zwei Kernnetzknoten als den am wenigsten belasteten Kernnetzknoten enthalten.

21. Netzknoten nach Anspruch 16, wobei der Netzknoten Mittel zum Erzeugen (802) eines Verteilungsvektors mit einer Anzahl von CNN-Einträgen für jeden der mindestens zwei Kernnetzknoten enthält und wobei die Anzahl proportional zur Last in dem jeweiligen Kernnetzknoten ist.

22. Netzknoten nach Anspruch 21, wobei die Mittel (903) zum Bestimmen des am wenigsten belasteten Kernnetzknotens Mittel zum Kennzeichnen eines bestimmten CNN-Eintrags in dem Verteilungsvektor als den am wenigsten belasteten Kernnetzknoten enthalten.

23. Netzknoten nach einem der Ansprüche 16-22, wobei der Netzknoten ein Steuerknoten (206-208) ist und wobei der Steuerknoten auch Mittel (901, 902) zum Verbinden einer Mobilstation (216), welche bei dem System (200) angemeldet werden soll, mit dem am wenigsten belasteten Kernnetzknoten zur Anmeldung enthält.

24. Funkkommunikationssystem, das mindestens zwei Kernnetzknoten (203-205) enthält, **dadurch gekennzeichnet, dass** das System (200) ferner mindestens einen Netzknoten (206-208) nach einem der Ansprüche 16-23 enthält.

## Revendications

1. Procédé de répartition de charge dans un système de communication radio (200), où ledit système (200) inclut au moins un réseau d'accès (202) et au moins deux noeuds de réseau central (203-205), et où au moins un réseau d'accès (202) inclut un premier noeud de commande (206-208) connecté auxdits au moins deux noeuds de réseau central (203-205), et où une station mobile (216) doit être enregistrée dans un desdits au moins deux noeuds de réseau central (203-205),
**caractérisé en ce que** ledit procédé inclut les étapes suivantes :
collecter (305-306,801) des données de noeud de réseau central (CNN) à partir desdits au moins deux noeuds de réseau central (203-205) dans un au moins un noeud de réseau (206-208) dans ledit système (200), moyennant quoi lesdites données CNN incluent au moins le nombre de stations mobiles enregistrées dans lesdits au moins deux noeuds de réseau central (203-205) ;
déterminer (307-308,407-409,507-509,608-610,705-706,801-805) à l'aide desdites données CNN lequel desdits au moins deux noeuds de réseau central (206-208) est le noeud de réseau central le moins chargé ; et
connecter (309,410,510,611,707) ladite station mobile (216) audit noeud de réseau central le moins chargé (206-208) en vue dudit enregistrement.

2. Procédé selon la revendication 1, dans lequel ladite étape de détermination du noeud de réseau central le moins chargé inclut les étapes suivantes :
déterminer (307) lequel desdits au moins deux noeuds de réseau central a le nombre le plus bas de stations mobiles enregistrées ; et
sélectionner (308) le noeud de réseau central avec le nombre le plus bas de stations mobiles enregistrées comme le noeud de réseau central le moins chargé.

3. Procédé selon la revendication 1, dans lequel ladite étape de détermination du noeud de réseau central le moins chargé inclut les étapes suivantes :
calculer (407) un premier rapport entre ledit nombre de stations mobiles enregistrées et le nombre maximal de stations mobiles que lesdits noeuds de réseau central peuvent supporter pour chacun desdits au moins deux noeuds de réseau central ;
déterminer (408) lequel desdits noeuds de réseau central a le premier rapport le plus bas ; et
sélectionner (409) le réseau central avec le premier rapport le plus bas comme étant le noeud de réseau central le moins chargé.

4. Procédé selon la revendication 1, dans lequel ladite étape de détermination du noeud de réseau central le moins chargé inclut les étapes suivantes :
calculer (507) la valeur de comptage au repos pour chacun desdits au moins deux noeuds de réseau central en soustrayant ledit nombre de stations mobiles enregistrées du nombre maximal de stations mobiles que lesdits noeuds de réseau central peuvent supporter ;
déterminer (508) lequel desdits noeuds de réseau central a la valeur de comptage au repos la plus élevée ; et
sélectionner (509) le noeud de réseau central avec la valeur de comptage au repos la plus élevée comme étant le noeud de réseau central le moins chargé.

5. Procédé selon la revendication 1, dans lequel ladite étape de détermination du noeud de réseau central le moins chargé inclut les étapes suivantes :
calculer (608) un second rapport entre la valeur de comptage au repos et le nombre maximal de stations mobiles que lesdits noeuds de réseau central peuvent supporter pour chacun desdits au moins deux noeuds de réseau central, où ladite valeur de comptage au repos est égale au nombre maximal de stations mobiles que lesdits noeuds de réseau central peuvent supporter moins ledit nombre de stations mobiles enregistrées ;
déterminer (609) lequel desdits noeuds de réseau central a le second rapport le plus élevé ; et
sélectionner (610) le noeud de réseau central avec le second rapport le plus élevé comme étant le noeud de réseau central le moins chargé.

6. Procédé selon la revendication 1, dans lequel ladite étape de détermination du noeud de réseau central le moins chargé inclut l'étape suivante :
sélectionner (705) le noeud de réseau central qui est identifié par une première entrée CNN dans un vecteur de répartition comme étant ledit noeud de réseau central le moins chargé, moyennant quoi ledit vecteur de répartition inclut un nombre prédéterminé d'entrées CNN qui sont déterminées à partir desdites données CNN.

7. Procédé selon la revendication 6, dans lequel ledit vecteur de répartition est créé selon les étapes suivantes :
déterminer (801) la charge dans chacun desdits au moins deux noeuds de réseau central à l'aide des données CNN ;
générer (802) un nombre d'entrées CNN pour chacun desdits au moins deux noeuds de réseau central, où ledit nombre d'entrées CNN est proportionnel à la charge dans chaque noeud de réseau central et où le nombre total d'entrées CNN est égal audit nombre prédéterminé d'entrées dans ledit vecteur de répartition ;
réarranger (803) lesdites entrées CNN ; et
disposer (804) lesdites entrées CNN réarrangées dans ledit vecteur de répartition.

8. Procédé selon la revendication 6 ou 7, dans lequel ledit vecteur de répartition est mis à jour chaque fois que ladite étape de collecte des données CNN a été effectuée.

9. Procédé selon une des revendications 1 à 8, dans lequel ladite étape de collecte (305-306,801) desdites données CNN est commandée par un temporisateur qui détermine quand ladite étape doit être exécutée.

10. Procédé selon une des revendications 1 à 8, dans lequel ladite étape de collecte (305-306,801) desdites données CNN est commandée par un compteur qui détermine quand ladite étape doit être exécutée.

11. Procédé selon la revendication 10, dans lequel ledit compteur démarre ladite étape de collecte (305-306,801) desdites données CNN chaque fois que le nombre de stations mobiles enregistrées dans un desdits au moins deux noeuds de réseau central a varié d'un pourcentage prédéterminé.

12. Procédé selon la revendication 11, dans lequel ledit pourcentage prédéterminé est ajusté pour chacun desdits au moins deux noeuds de réseau central en fonction de leur charge.

13. Procédé selon une des revendications 1 à 12, dans lequel ledit nombre de stations mobiles enregistrées est réglé à une valeur qui ne correspond pas au nombre effectif de stations mobiles enregistrées dans au moins un desdits noeuds de réseau central.

14. Procédé selon une des revendications 1 à 13, dans lequel lesdits au moins deux noeuds de réseau central sont des MSC/VLRs et lesdits VLRs contiennent lesdites données CNN relatives audit nombre de stations mobiles enregistrées.

15. Procédé selon une des revendications 1 à 14, dans lequel ledit noeud de réseau est ledit premier noeud de commande (206-208).

16. Noeud de réseau pour un système de communication radio (200), dans lequel ledit système inclut au moins deux noeuds de réseau central (203-205) connectés audit noeud de réseau (206-208),
**caractérisé en ce que** ledit noeud de réseau inclut :
des moyens (904) pour collecter des données CNN à partir desdits au moins deux noeuds de réseau central, moyennant quoi lesdites données CNN incluent le nombre de stations mobiles enregistrées dans lesdits au moins deux noeuds de réseau central ; et
des moyens (903) pour déterminer à l'aide desdites données CNN lequel desdits au moins deux noeuds de réseau central (203-205) est le noeud de réseau central le moins chargé, moyennant quoi le noeud de réseau central le moins chargé est déterminé pour connecter une station mobile (216), qui doit être enregistrée dans un desdits au moins deux noeuds de réseau central (203-205), audit noeud de réseau central le moins chargé en vue de l'enregistrement.

17. Noeud de réseau selon la revendication 16, dans lequel lesdits moyens (903) pour déterminer le noeud de réseau central le moins chargé incluent des moyens pour sélectionner le noeud de réseau central avec le nombre le plus bas de stations mobiles enregistrées comme étant le noeud de réseau central le moins chargé.

18. Noeud de réseau selon la revendication 16, dans lequel lesdits moyens (903) pour déterminer le noeud de réseau central le moins chargé incluent des moyens pour sélectionner le noeud de réseau central avec le rapport le plus bas entre ledit nombre de stations mobiles enregistrées et le nombre maximal de stations mobiles que lesdits noeuds de réseau peuvent supporter comme étant ledit noeud de réseau central le moins chargé.

19. Noeud de réseau selon la revendication 16, dans lequel lesdits moyens (903) pour déterminer le noeud de réseau central le moins chargé incluent des moyens pour sélectionner le noeud de réseau central avec la valeur de comptage au repos la plus élevée comme étant le noeud de réseau central le moins chargé.

20. Noeud de réseau selon la revendication 16, dans lequel lesdits moyens (903) pour déterminer le noeud de réseau central le moins chargé incluent des moyens pour sélectionner le noeud de réseau central avec le rapport le plus élevé entre la valeur de comptage au repos et le nombre maximal de stations mobiles que lesdits noeuds de réseau central peuvent supporter pour chacun desdits au moins deux noeuds de réseau central comme étant le noeud de réseau central le moins chargé.

21. Noeud de réseau selon la revendication 16, dans lequel ledit noeud de réseau inclut des moyens pour générer (802) un vecteur de distribution avec un nombre d'entrées CNN pour chacun desdits au moins deux noeuds de réseau central, et où ledit nombre est proportionnel à la charge dans chaque noeud de réseau central.

22. Noeud de réseau selon la revendication 21, dans lequel lesdits moyens (903) pour déterminer le noeud de réseau central le moins chargé incluent des moyens pour identifier une entrée CNN spécifique dans ledit vecteur de répartition comme étant ledit noeud de réseau central le moins chargé.

23. Noeud de réseau selon une des revendications 16 à 22, dans lequel ledit noeud de réseau est un noeud de commande (206-208) et où ledit noeud de commande inclut aussi des moyens (901,902) pour connecter une station mobile (216) qui doit être enregistrées dans ledit système (200) audit noeud de réseau central le moins chargé en vue d'un enregistrement.

24. Système de communication radio incluant au moins deux noeuds de réseau central (203-205), **caractérisé en ce que** ledit système (200) inclut en outre au moins un noeud de réseau (206-208) selon une des revendications 16 à 23.
